# EUROPÄISCHE PATENTSCHRIFT

(11) **EP 2 679 356 B1**
(45) Veröffentlichungstag und Bekanntmachung des Hinweises auf die Patenterteilung: **08.07.2015**
(21) Anmeldenummer: 13166683.6
(22) Anmeldetag: 06.05.2013
(51) Int. Cl.: B26D 7/30, G01G 17/02, G01G 19/387, B07C 5/00, G01G 15/02, B65B 25/06

(54) **Verfahren und Vorrichtung zum Handhaben von Portionen**
Method and apparatus for handling portions
Procédé et appareil pour manipuler des portions

(30) Priorität: 25.06.2012 DE 102012210703
(43) Veröffentlichungstag der Anmeldung: 01.01.2014
(73) Patentinhaber: Weber Maschinenbau GmbH Breidenbach, 35236 Breidenbach (DE)
(72) Erfinder: Bauer, Sigfrid, 17091 Groß Teelzieben (DE); Lischinski, Gerd, 17349 Schönbeck (DE)
(74) Vertreter: Manitz, Finsterwald & Partner GbR

(56) Entgegenhaltungen:
- EP-A1- 2 369 312
- EP-A1- 2 416 129
- EP-A1- 2 420 364
- DE-A1-102009 022 820
- US-A1- 2012 167 730

## Beschreibung

Die Erfindung betrifft ein Verfahren gemäß dem Oberbegriff des Anspruchs 1 und eine Vorrichtung gemäß dem Oberbegriff des Anspruchs 10.

Derartige Vorrichtungen sind beispielsweise aus EP 2 416 129 A1 bekannt und werden beispielsweise in der Lebensmittelindustrie dazu eingesetzt, um von einer Schneidvorrichtung, wie z.B. einem Hochleistungsslicer, abgetrennte Produktscheiben portionsweise einer nachgeordneten Bearbeitungsvorrichtung, beispielsweise einer Verpackungsmaschine, zuzuführen. Als Produktförderer kommen insbesondere Band- oder Riemenförderer in Betracht. Um sicherzustellen, dass nur solche Portionen weiterverarbeitet werden, welche eine vorgegebene Spezifikation, beispielsweise ein bestimmtes Gewicht oder eine bestimmte Scheibenanzahl, erfüllen, werden unvollständige und/oder fehlerhafte Portionen automatisch, z.B. mit Hilfe eines Sensors, erkannt und beispielsweise manuell korrigiert, d.h. insbesondere auf ein gefordertes Sollgewicht gebracht. Hierfür braucht ein entsprechender Bediener jedoch eine gewisse Zeit, weshalb durch eine derartige Korrektur letztlich die Wirtschaftlichkeit der Produktionsanlage eingeschränkt wird. Darüber hinaus kann es bei einer manuellen Korrektur infolge einer Abwesenheit oder Unachtsamkeit des Bedieners dazu kommen, dass fehlerhafte Portionen weitergefördert und schließlich verpackt werden. Ein derartiges Weiterverarbeiten fehlerhafter Portionen ist bei der Lebensmittelproduktion jedoch unbedingt zu vermeiden.

Eine automatische Umsetzvorrichtung, welche Produktscheiben auf untergewichtigen Portionen ablegen kann, wird in EP 2 369 312 A1 gelehrt.

Es ist daher eine Aufgabe der Erfindung, eine alternative Möglichkeit zu schaffen, mit welcher unvollständige Portionen zuverlässig und automatisch korrigiert werden können.

Die Lösung dieser Aufgabe erfolgt durch ein Verfahren mit den Merkmalen des Anspruchs 1 sowie durch eine Vorrichtung mit den Merkmalen des Anspruchs 10.

Erfindungsgemäß werden die Portionen, insbesondere zeilenweise, nacheinander in einem Hauptförderstrom entlang einer Förderrichtung gefördert. Bevorzugt erfolgt die Förderung der Portionen in mehreren, beispielsweise nebeneinander angeordneten Spuren. Hierbei entstehen die Portionen insbesondere zunächst durch ein gleichzeitiges Aufschneiden von Lebensmittelprodukten in unterschiedlichen Spuren. Dabei ist denkbar, dass die Lebensmittelprodukte mehrspurig von einer gemeinsamen Aufschneidemaschine aufgeschnitten werden. Alternativ sind auch mehrere, jeweils einer Spur zugeordnete Aufschneidemaschinen denkbar.

Unvollständige, insbesondere untergewichtige, Portionen werden automatisch, z.B. über einen Sensor, vorzugsweise eine Waage, erkannt und/oder klassifiziert. Bei einer mehrspurigen Produktförderung kann auch eine Mehrspurwaage eingesetzt werden. Es können beispielsweise bestimmte Eigenschaften, wie das Gewicht, die Form, die Scheibendicke und/oder der Fettgehalt, sämtlicher Portionen erkannt werden. Alternativ oder zusätzlich können die Portionen, beispielsweise anhand von gewissen Grenzwerten, welche z.B. das Gewicht, die Form, die Scheibendicke und/oder den Fettgehalt betreffen, klassifiziert werden.

Die ermittelten Daten können insbesondere an eine Steuerung weitergegeben werden. Unvollständige Portionen werden aus dem Hauptförderstrom ausgeschleust und in einem Korrekturstrom einer Korrekturstation zugeführt. Das Ausschleusen erfolgt zum Beispiel durch ein steuerbares Weichen- oder Wippenelement, wie es auf dem Fachgebiet bekannt ist.

Die Korrekturstation kann dabei als separates Bauteil ausgebildet sein, das z.B. zwischen einer Aufschneidemaschine und einer Verpackungsmaschine positioniert wird. Es ist jedoch auch denkbar, die Korrekturstation in eine Aufschneidemaschine, eine Fördereinheit, einen Formsatzbilder oder eine Verpackungsmaschine zu integrieren.

Unvollständige Portionen werden jeweils durch zumindest eine Einzelscheibe, welche einem Scheibenspeicher entnommen wird, mit Hilfe einer automatischen Übergabeeinheit vervollständigt.

Die Übergabeeinheit kann zunächst eine unvollständige Portion an einer Korrekturspur aufnehmen. Anschließend wird die Übergabeeinheit zum Scheibenspeicher bewegt und nimmt dort zusätzlich zur unvollständigen Portion zumindest eine Einzelscheibe auf. Eine unvollständige Portion wird somit durch eine Einzelscheibe vervollständigt. Falls eine Einzelscheibe zur Vervollständigung noch nicht ausreicht, können beliebig weitere Einzelscheiben nach und nach auf oder unter die unvollständige Portion gebracht werden. Dabei kann die Übergabeeinheit einen Sensor, beispielsweise eine Waage, umfassen, um festzustellen, wie viele Einzelscheiben zur Vervollständigung benötigt werden bzw. ob die Portion auf der Übergabeeinheit bereits vollständig oder noch unvollständig ist.

Alternativ nimmt die Übergabeeinheit zunächst zumindest eine Einzelscheibe aus dem Scheibenspeicher auf. Aufgrund der Klassifikation der unvollständigen Portionen werden nach und nach so viele Einzelscheiben aufgenommen, wie zur Vervollständigung einer bestimmten unvollständigen Portion nötigt sind. Anschließend wird die Übergabeeinheit zu einer Korrekturspur bewegt. Dort wird zusätzlich zur mindestens einen Einzelscheibe eine unvollständige Portion aufgenommen. Insgesamt entsteht auch auf diese Weise eine vollständige Portion.

Es sind auch mehrere Übergabeeinheiten denkbar, welche beispielsweise hintereinander und/oder nebeneinander angeordnet sind. Der Scheibenspeicher ist bevorzugt in die Korrekturstation integriert, kann aber auch als separate Station vorgesehen sein, auf welche die Übergabeeinheit zugreifen kann.

Bevorzugt wird die Einzelscheibe automatisch, insbesondere mit Hilfe der Übergabeeinheit, dem Scheibenspeicher entnommen. Schließlich werden die vervollständigten Portionen automatisch wieder in den Hauptförderstrom eingeschleust. Das Einschleusen erfolgt z.B. durch ein steuerbares Weichen- oder Wippenelement.

Unvollständige Portionen werden erfindungsgemäß somit automatisch erkannt und/oder klassifiziert und aus dem Hauptförderstrom ausgeschleust. Die Leistungsfähigkeit bzw. Kapazität der Aufschneidevorrichtung für die Lebensmittelprodukte muss auf diese Weise nicht an die Leistungsfähigkeit bzw. Kapazität der Übergabeeinheit(en) angepasst werden. Moderne Hochgeschwindigkeitsslicer besitzen derart hohe Schneidleistungen, dass eine zur Vervollständigung der Produkte vorgesehene Übergabeeinheit mit einer Kinematik ausgestattet sein müsste, die sehr schnelle Bewegungsabläufe gestattet. Selbst wenn eine derartige Kinematik technisch realisierbar ist, besitzt eine entsprechende Übergabeeinheit häufig nicht die von der Praxis geforderte Tragfähigkeit, d.h. ab z.B. einem bestimmten Portionsgewicht können die Portionen nicht mehr mit der eigentlich gewünschten Geschwindigkeit bewegt werden.

Da in der Praxis meist nur verhältnismäßig wenige Portionen unvollständig die Aufschneidemaschine verlassen, hat die Übergabeeinheit genügend Zeit, die unvollständigen Portionen im Korrekturstrom zu vervollständigen. Von Haus aus vollständige Portionen können davon unbeeinflusst im Hauptförderstrom, insbesondere an der Korrekturstation vorbei bzw. unter der Korrekturstation hindurch bzw. über die Korrekturstation hinweg, weiter bewegt und verarbeitet werden. Der Hauptförderstrom kann dabei auch durch die Korrekturstation hindurchgeführt werden.

Durch die automatische Vervollständigung treten auch keine Fehler durch einen Bediener auf. Zudem können Kosten gespart werden.

Die automatische Vervollständigung erfolgt präzise, da zur Vervollständigung einzelne Scheiben - gegebenenfalls nach und nach mehrere Einzelscheiben - zur Vervollständigung jeweiliger unvollständiger Portionen verwendet werden.

Dadurch, dass die unvollständigen Portionen zunächst durch die automatische Übergabeeinheit vervollständigt werden, ehe sie wieder in den Hauptförderstrom eingeschleust werden, wird der Korrekturstrom unterbrochen. Aufgrund der Unterbrechung des Korrekturstroms werden die unvollständigen Portionen von der Korrekturstation nicht wieder abtransportiert, sofern sie nicht zuvor vervollständigt und aktiv wieder in den Hauptförderstrom verbracht wurden.

Die Erfindung betrifft auch eine Vorrichtung, insbesondere zum Durchführen eines erfindungsgemäßen Verfahrens. Die Vorrichtung umfasst einen Hauptförderer, welcher die Portionen, insbesondere zeilenweise, nacheinander in einem Hauptförderstrom entlang einer Förderrichtung fördert. Die Förderung kann beispielsweise mehrspurig in neben- und/oder übereinander angeordneten Spuren erfolgen. Die Lebensmittelprodukte werden dazu beispielsweise gleichzeitig, insbesondere mit Hilfe einer gemeinsamen Aufschneidemaschine, aufgeschnitten. Die Vorrichtung umfasst zudem eine Korrekturstation, der aus dem Hauptförderstrom ausgeschleuste unvollständige Portionen in einem Korrekturstrom zuführbar sind. Zudem umfasst die Vorrichtung einen Scheibenspeicher, welcher dazu ausgebildet ist, Einzelscheiben derart zu bevorraten, dass die Einzelscheiben, insbesondere automatisch, einzeln entnommen werden können. Insbesondere arbeitet eine Übergabeeinheit in einer Korrekturebene. Die Übergabeeinheit ist dazu ausgebildet, unvollständige Portionen jeweils mittels zumindest einer Einzelscheibe aus dem Scheibenspeicher zu vervollständigen. Insbesondere kann die Übergabeeinheit dazu ausgebildet sein, die Einzelscheiben dem Scheibenspeicher einzeln zu entnehmen.

Die Übergabeeinheit kann zunächst eine unvollständige Portion an einer Korrekturspur aufnehmen. Anschließend wird die Übergabeeinheit zum Scheibenspeicher bewegt und nimmt dort zusätzlich zur unvollständigen Portion zumindest eine Einzelscheibe auf. Eine unvollständige Portion wird somit durch eine Einzelscheibe vervollständigt. Falls eine Einzelscheibe zur Vervollständigung noch nicht ausreicht, können beliebig weitere Einzelscheiben nach und nach auf oder unter die unvollständige Portion gebracht werden. Dabei kann die Übergabeeinheit einen Sensor, beispielsweise eine Waage, umfassen, um festzustellen, wie viele Einzelscheiben zur Vervollständigung benötigt werden bzw. ob die Portion auf der Übergabeeinheit bereits vollständig oder noch unvollständig ist.

Alternativ nimmt die Übergabeeinheit zunächst zumindest eine Einzelscheibe aus dem Scheibenspeicher auf. Aufgrund der Klassifikation der unvollständigen Portionen werden nach und nach so viele Einzelscheiben aufgenommen, wie zur Vervollständigung einer bestimmten unvollständigen Portion nötigt sind. Anschließend wird die Übergabeeinheit zu einer Korrekturspur bewegt. Dort wird zusätzlich zur mindestens einen Einzelscheibe eine unvollständige Portion aufgenommen. Insgesamt entsteht auch auf diese Weise eine vollständige Portion.

Weiterbildungen der Erfindung sind auch den abhängigen Ansprüchen, der Beschreibung sowie den beigefügten Zeichnungen zu entnehmen.

Gemäß einer Ausführungsform erfolgen das Vervollständigen der Portionen und das Entnehmen von Einzelscheiben in bezüglich der Förderrichtung nebeneinanderliegenden Spuren. Die Bewegungsstrecken der Übergabeeinheit werden dadurch minimiert. Alternativ ist jedoch auch denkbar, zumindest zwei der Spuren übereinander anzuordnen.

Nach einer weiteren Ausführungsform werden zum Befüllen des Scheibenspeichers Einzelscheiben aus dem Hauptförderstrom abgezweigt und mit Hilfe der Übergabeeinheit dem Scheibenspeicher zugeführt. Das Befüllen erfolgt insbesondere dadurch, dass eine Einzelscheibe nach der anderen von der Übergabeeinheit aufgenommen und dem Scheibenspeicher zugeführt wird. Auf diese Weise sind die Einzelscheiben dem Scheibenspeicher insbesondere auch wieder einzeln zu entnehmen. Alternativ ist auch denkbar, dass beispielsweise immer zwei oder mehrere übereinanderliegende Einzelscheiben aus dem Hauptförderstrom abgezweigt und mit Hilfe der Übergabeeinheit gemeinsam dem Scheibenspeicher zugeführt werden.

Gemäß einer weiteren Ausführungsform wird zumindest eine Fördereinrichtung des Scheibenspeichers entgegengesetzt zur Förderrichtung bewegt. Somit kann der Scheibenspeicher, der insbesondere als Bandförderer ausgebildet ist, nach und nach mit Einzelscheiben befüllt werden. Bei Bedarf kann der Bandförderer wieder in Förderrichtung bewegt werden, um der Übergabeeinheit Einzelscheiben zur Vervollständigung unvollständiger Portionen zur Verfügung zu stellen.

Nach einer weiteren Ausführungsform können bei Erreichen eines bestimmten Mindestfüllstandes des Scheibenspeichers Einzelscheiben angefordert werden. Befinden sich zu wenige Einzelscheiben im Scheibenspeicher, können z.B. mit Hilfe einer Steuerung von der Aufschneidevorrichtung gezielt Einzelscheiben erzeugt bzw. vom Hauptförderstrom gezielt Einzelscheiben ausgeschleust werden. Der Füllstand des Scheibenspeichers kann hierbei beispielsweise mit Hilfe eines Sensors bestimmt werden. Dieser Sensor kann z.B. in einen Bandförderer des Scheibenspeichers integriert sein. Auf diese Weise kann sichergestellt werden, dass immer genügend Einzelscheiben zur Vervollständigung unvollständiger Portionen zur Verfügung stehen.

Gemäß einer weiteren Ausführungsform wird der Scheibenspeicher mittels der Übergabeeinheit befüllt. Insbesondere werden die Einzelscheiben dabei durch die Übergabeeinheit einzeln dem Korrekturstrom entnommen und dem Scheibenspeicher zugeführt. Alternativ oder zusätzlich werden zum Vervollständigen unvollständiger Portionen die Einzelscheiben mittels der Übergabeeinheit aus dem Scheibenspeicher entnommen. Auf diese Weise kann sowohl das Befüllen als auch das Leeren des Scheibenspeichers vollautomatisch erfolgen. Alternativ ist jedoch auch denkbar, dass der Scheibenspeicher beispielsweise manuell befüllt wird, insbesondere also nur das Entnehmen der Einzelscheiben automatisch erfolgt.

Gemäß einer weiteren Ausführungsform werden die Einzelscheiben mittels eines, insbesondere optischen, Sensors klassifiziert. Die Klassifizierung erfolgt insbesondere nach der Größe, der Form und/oder dem Gewicht der Einzelscheiben.

Nach einer weiteren Ausführungsform werden die Einzelscheiben entsprechend ihrer Klassifikation dem Scheibenspeicher zugeführt.

Bevorzugt werden dabei die Einzelscheiben entsprechend ihrer Klassifikation unterschiedlichen Bereichen des Scheibenspeichers zugeführt. Die Einzelscheiben liegen somit im Scheibenspeicher beispielsweise sortiert nach Größe, Form und/oder Gewicht vor. Je nach Eigenschaft und/oder Klassifikation der unvollständigen Portion kann somit gezielt eine passende Einzelscheibe zur Vervollständigung der Portion aus dem Scheibenspeicher entnommen werden.

Bei dem Scheibenspeicher kann es sich beispielsweise um einen oder mehrere nebeneinanderliegende Bandförderer handeln. Alternativ oder zusätzlich ist auch denkbar, den Scheibenspeicher als zumindest einen Vertikalspeicher auszubilden. Demnach werden die Einzelscheiben übereinanderliegenden Bereichen eines Vertikalspeichers zugeführt. Die einzelnen Bereiche können jeweils als Bandförderer ausgebildet sein. Der Vertikalspeicher wird zum Zuführen und Entnehmen von Einzelscheiben in vertikaler Richtung verfahren, bis eine jeweils benötigte Einzelscheibe, insbesondere mittels der Übergabeeinheit, zugeführt und/oder entnommen werden kann. Bevorzugt sind neben- und/oder hintereinander mehrere Vertikalspeicher angeordnet. Dadurch können insbesondere Einzelscheiben, die einer bestimmten Klassifikation entsprechen, gezielt abgelegt bzw. entnommen werden.

Gemäß einer weiteren Ausführungsform werden Einzelscheiben dem Scheibenspeicher zugeführt, die zumindest im Durchschnitt eine kleinere Fläche und/oder ein geringeres Gewicht als die Scheiben der unvollständigen Portionen aufweisen. Dadurch wird der Tatsache Rechnung getragen, dass unvollständige Portionen meist nur geringfügig von der Norm abweichen. Unerwünschte "Give-Aways" werden dadurch minimiert. Die Fläche und/oder das Gewicht der Einzelscheiben kann gemäß der Fehlgewichtshistorie der Portionen gewählt werden.

Nach einer weiteren Ausführungsform wird die Übergabeeinheit in drei Dimensionen bewegt. Die Übergabeeinheit kann somit sowohl auf sämtliche Spuren des Korrekturstroms zugreifen als auch Einzelscheiben bzw. Portionen anheben und absenken. Ferner kann die Übergabeeinheit in und entgegengesetzt zur Förderrichtung bewegt werden. Mögliche Unterbrechungen der Spuren im Korrekturstrom können somit durch die Übergabeeinheit überbrückt werden. Auch ist denkbar, dass die Übergabeeinheit vollständige Portionen wieder direkt in den Hauptförderstrom einschleust.

Gemäß einer weiteren Ausführungsform wird zum Aufnehmen einer Einzelscheibe aus dem Scheibenspeicher und/oder einer unvollständigen Portion die Übergabeeinheit synchron mit einer Fördereinrichtung des Scheibenspeichers und/oder der Korrekturstation bewegt, insbesondere in Förderrichtung. Auf diese Weise wird eine Einzelscheibe bzw. eine unvollständige Portion von der Fördereinrichtung auf die Übergabeeinheit störungsfrei übertragen.

Nach einer weiteren Ausführungsform werden unvollständige Portionen mittels zumindest eines ersten Förderabschnitts aus dem Hauptförderstrom abgezweigt und vervollständigte Portionen mit Hilfe der Übergabeeinheit wenigstens einem zweiten Förderabschnitt zugeführt, mittels welchem die vervollständigten Portionen wieder dem Hauptförderstrom zugeführt werden. Das Abzweigen aus dem bzw. das Einschleusen in den Hauptförderstrom erfolgt beispielsweise mit Hilfe eines Wippenbandes. Die Korrekturspur ist somit unterbrochen. Die Übergabeeinheit wird folglich dazu verwendet, eine Lücke in der Korrekturspur zu überbrücken. Somit wird verhindert, dass unvollständige Portionen versehentlich wieder auf den Hauptförderstrom gelangen. Alternativ ist auch denkbar, dass die Übergabeeinheit nach der Vervollständigung der Portionen die vervollständigten Portionen direkt dem Hauptförderstrom zuführt. Ein zweiter Förderabschnitt braucht in diesem Fall nicht vorgesehen zu sein.

Gemäß einer weiteren Ausführungsform werden die Einzelscheiben mittels einer Aufschneidevorrichtung, insbesondere einem Hochleistungsslicer, erzeugt, die auch die Portionen erzeugt, wobei insbesondere die Portionen in einem Normalbetrieb und die Einzelscheiben bei ruhendem Normalbetrieb in einem Einzelscheibenbetrieb erzeugt werden oder die Aufschneidevorrichtung mehrspurig arbeitet und zumindest eine Spur für die Erzeugung der Einzelscheiben vorgesehen ist. Es ist somit denkbar, dass beispielsweise zum Beginn des Aufschneidevorgangs zunächst ausschließlich Einzelscheiben erzeugt werden, welche aus dem Hauptförderstrom in den Korrekturstrom ausgeschleust werden und dem Scheibenspeicher zugeführt werden. Anschließend wechselt die Aufschneidevorrichtung beispielsweise in einen Normalbetrieb. Dieser wird insbesondere so lange aufrechterhalten, bis ein Mindestfüllstand des Scheibenspeichers unterschritten wird. Ist ein Mindestfüllstand erreicht, werden wieder Einzelscheiben erzeugt.

Nach einer weiteren Ausführungsform werden die Portionen in einem Mehrspurbetrieb der Korrekturstation zeilenweise zugeführt, wobei jede Portionszeile wenigstens eine unvollständige Portion enthält. Es ist dabei denkbar, zunächst eine komplette Zeile, d.h. alle Portionen, die sich auf unterschiedlichen Spuren des Hauptförderstroms, jedoch bzgl. der Förderrichtung auf derselben Position befinden, auszuschleusen. Alternativ ist auch denkbar, nur Portionen einzelner Spuren des Hauptförderstroms auszuschleusen, d.h. das Ausschleusen lediglich für eine Teilmenge aller Spuren vorzunehmen.

Enthält eine Zeile des ersten Förderabschnitts eine vollständige Portion, wird diese - ohne korrigiert zu werden - von der Übergabeeinheit vom ersten Förderabschnitt zum zweiten Förderabschnitt bzw. direkt auf eine Spur des Hauptförderstroms befördert. Die unvollständigen Portionen der einzelnen Zeilen können hingegen, beispielsweise durch die Übergabeeinheit, nach und nach vervollständigt werden. Dabei ist es denkbar, die unvollständigen Portionen z.B. Zeile für Zeile oder Spur für Spur zu vervollständigen. Es ist auch denkbar, unvollständige Portionen von Spuren zu vervollständigen, auf denen sich mehr unvollständige Portionen als auf den anderen Spuren befinden.

Nach einer weiteren Ausführungsform ist die Anzahl der Spuren im Korrekturstrom von der nominellen Spuranzahl im Hauptförderstrom verschieden. Die Übergabeeinheit ordnet dabei die einlaufenden Portionen in auslaufenden Portionszeilen entsprechend der nominellen Spuranzahl an. Die Übergabeeinheit kann also auch als Formatsatzbilder arbeiten. Ein gewünschter Formatsatz, d.h. eine bestimmte Anordnung vollständiger Portionen, die z.B. einer Verpackungsmaschine zugeführt werden soll, kann somit durch eine bestimmte Positionierung der vervollständigten Portionen erreicht werden. Portionen, welche z.B. in K Spuren der Übergabeeinheit zugeführt werden, können derart umgesetzt werden, dass sie in H Spuren die Korrekturstation verlassen. Mit Hilfe der Übergabeeinheit wird bevorzugt die Anzahl der Spuren an die Anzahl H der Spuren im Hauptförderstrom angepasst. Vervollständigte Portionen, welche beispielsweise in H Spuren nebeneinander angeordnet sind, können somit gemeinsam in eine Lücke des Hauptförderstroms eingeschleust werden.

Gemäß einer Ausführungsform der erfindungsgemäßen Vorrichtung umfasst diese wenigstens einen Sensor zum automatischen Erkennen und/oder Klassifizieren unvollständiger Portionen. Bei dem Sensor kann es sich beispielsweise um einen optischen Sensor, wie z.B. einen Produktscanner, handeln. Alternativ oder zusätzlich ist auch eine Waage denkbar. Im Mehrspurbetrieb kann auch beispielsweise eine Mehrspurwaage eingesetzt werden. Die vom Sensor ermittelten Daten werden insbesondere an eine Steuerung weitergegeben. Unvollständige, insbesondere untergewichtige, Portionen werden auf diese Weise zuverlässig erkannt und/oder klassifiziert.

Nach einer weiteren Ausführungsform ist der Scheibenspeicher in Förderrichtung gesehen neben zumindest einer Korrekturspur der Korrekturstation angeordnet. Auf diese Weise kann die Übergabeeinheit bei möglichst geringem Fahrweg auf eine Korrekturspur bzw. auf den Scheibenspeicher zugreifen. Alternativ ist auch denkbar, zumindest einen Teil des Scheibenspeichers, z.B. einen Bandförderer, oberhalb oder unterhalb der Korrekturspur anzuordnen.

Nach einer weiteren Ausführungsform umfasst der Scheibenspeicher zumindest eine Fördereinrichtung, die sowohl in als auch entgegengesetzt zur Förderrichtung bewegbar ist, wobei bevorzugt der Scheibenspeicher genau eine Spur aufweist. Bei der Bewegung entgegengesetzt zur Förderrichtung kann der Scheibenspeicher beispielsweise befüllt werden. Muss auf Einzelscheiben aus dem Scheibenspeicher zurückgegriffen werden, wird dieser in Förderrichtung bewegt. Die Einzelscheiben werden dabei beispielsweise auf die Übergabeeinheit transportiert bzw. in einen Bereich transportiert, der der Übergebeeinheit zugänglich ist. Alternativ kann der Scheibenspeicher auch mehrere Spuren aufweisen, welche beispielsweise nebeneinander und/ oder übereinander angeordnet sind. Die einzelnen Spuren können beispielsweise als Bandförderer ausgebildet sein.

Gemäß einer weiteren Ausführungsform umfasst der Scheibenspeicher einen Vertikalspeicher mit mehreren übereinanderliegenden Bereichen, wobei der Vertikalspeicher zum Zuführen und Entnehmen von Einzelscheiben senkrecht zu einer Korrekturebene verfahrbar ist. In einem derartigen Vertikalspeicher, welcher beispielsweise aus mehreren übereinander- und/oder nebeneinanderliegenden Bandförderern und/oder Fächern ausgebildet ist, können beispielsweise Einzelscheiben gemäß ihrer Klassifikation gezielt in einem bestimmten Bereich abgelegt werden. Der Scheibenspeicher kann hierbei zusätzlich zum Vertikalspeicher einen vorgeschalteten Bandförderer aufweisen. Der Vertikalspeicher wird zum Zuführen und Entnehmen von Einzelscheiben vertikal verfahren, bis ein gewünschter Bereich in der Ebene des Bandförderers des Scheibenspeichers liegt, so dass Einzelscheiben, welche sich in dem bestimmten Bereich befinden, mit Hilfe des Bandförderers des Scheibenspeichers in den Vertikalspeicher hinein bzw. aus dem Vertikalspeicher heraus bewegt werden können.

Bevorzugt werden mehrere Vertikalspeicher neben- und/oder hintereinander angeordnet. Durch den Einsatz von Vertikalspeichern kann Platz gespart werden. Zudem ist es möglich, Einzelscheiben gemäß einer bestimmten Klassifikation gezielt abzulegen bzw. zu entnehmen.

Gemäß einer weiteren Ausführungsform ist der Korrekturstation in Förderrichtung gesehen zumindest ein erster Förderabschnitt vorgelagert und wenigstens ein zweiter Förderabschnitt nachgeordnet. Unvollständige Portionen sind mittels des ersten Förderabschnitts von dem Hauptförderer abzweigbar und vervollständigte Portionen mit Hilfe der Übergabeeinheit dem zweiten Förderabschnitt zuführbar. Mittels des zweiten Förderabschnitts sind die vervollständigten Portionen wieder dem Hauptförderer zuführbar, wobei bevorzugt der erste Förderabschnitt und der zweite Förderabschnitt jeweils als Wippe und/oder Einleger, vorzugsweise in Form eines Endlosbandes, ausgebildet sind. Alternativ kann auch auf einen zweiten Förderabschnitt gänzlich verzichtet werden. Dabei werden die vervollständigten Portionen mit Hilfe der Übergabeeinheit direkt dem Hauptförderer zugeführt. Auf diese Weise wird eine automatische Ausschleusung und Vervollständigung unvollständiger Portionen gewährleistet. Auch werden die vervollständigten Portionen wieder automatisch dem Hauptförderer zugeführt.

Gemäß einer weiteren Ausführungsform umfasst die Übergabeeinheit einen Roboteraufnehmer. Dieser kann beispielsweise elektrisch und/oder pneumatisch betrieben werden.

Nach einer weiteren Ausführungsform ist der Roboteraufnehmer längs zweier senkrecht zueinander in einer Korrekturebene verlaufender Achsen sowie einer senkrecht zur Korrekturebene verlaufenden Achse bewegbar.

Der Roboteraufnehmer lässt sich somit beispielsweise derart verfahren, dass dieser Einzelscheiben, unvollständige und/oder vollständige Portionen aufnehmen kann, zwischen einzelnen Spuren verfahren kann und zudem beispielsweise zwischen einem ersten Förderabschnitt und einem zweiten Förderabschnitt bewegt werden kann. Beispielsweise weist der Roboteraufnehmer zumindest eine Servo-Achse für Bewegungen in der Förderebene und/oder zumindest eine pneumatische oder hydraulische Achse für die Bewegung in vertikaler Richtung auf.

Nach einer weiteren Ausführungsform umfasst der Roboteraufnehmer wenigstens eine Aufnahmegabel, die zum Aufnehmen und/oder Ablegen von Einzelscheiben und/oder Portionen Gitterstrukturen der Korrekturstation durchdringen kann. Insbesondere die Endabschnitte der Spuren des ersten Förderabschnitts, ein Endabschnitt eines Bandförderers des Scheibenspeichers, die einzelnen Bereiche des Vertikalspeichers und/oder die Spuren des zweiten Förderabschnitts können Gitterstrukturen aufweisen, durch die die Aufnahmegabel hindurchgreifen kann. Somit kann die Aufnahmegabel von unten kommend beispielsweise eine Einzelscheibe, eine unvollständige oder eine vollständige Portion aufnehmen bzw. von oben kommend eine Einzelscheibe, eine unvollständige oder eine vollständige Portion aufsetzen.

Gemäß einer weiteren Ausführungsform werden die Gitterstrukturen jeweils von einem Riemenförderer oder einem stationären Ablagegitter gebildet, wobei insbesondere der Riemenförderer mehrere in Förderrichtung verlaufende und quer zur Förderrichtung voneinander beabstandete Endlosriemen umfasst. Somit können die Gitterstrukturen insbesondere durch den Roboteraufnehmer durchdrungen werden und zudem in bzw. entgegen der Förderrichtung bewegt werden.

Die Erfindung wird im Folgenden beispielhaft unter Bezugnahme auf die Zeichnungen beschrieben.
- Fig. 1: zeigt eine Draufsicht eines Ausführungsbeispiels einer erfindungsgemäßen Vorrichtung;
- Fig. 2: zeigt eine Seitenansicht eines Vertikalspeichers einer erfindungsgemäßen Vorrichtung; und
- Fig. 3: zeigt eine Seitenansicht einer Aufnahmegabel einer erfindungsgemäßen Vorrichtung.

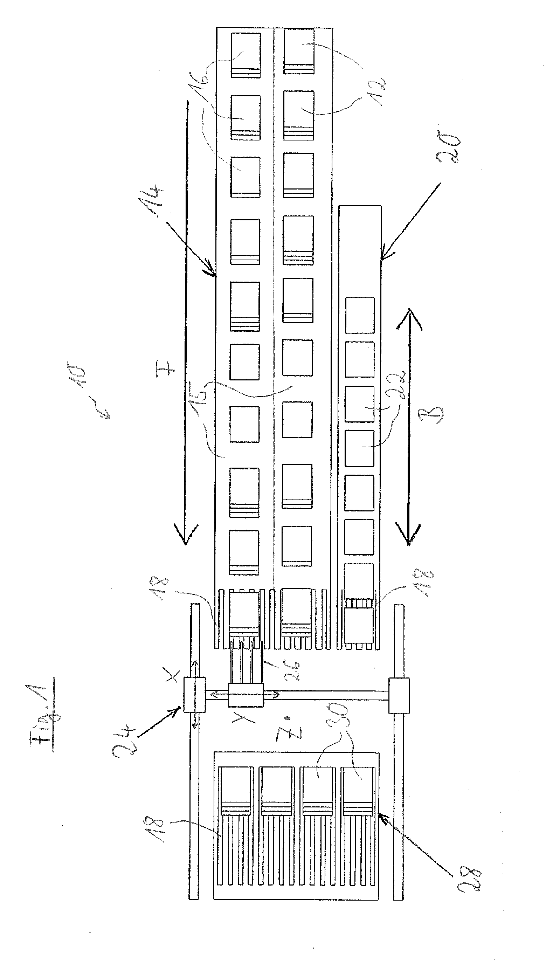

Fig. 1 zeigt eine Korrekturstation 10 einer erfindungsgemäßen Vorrichtung zum Handhaben von Portionen 12, die durch Aufschneiden von Lebensmittelprodukten, beispielsweise mit Hilfe eines nicht dargestellten Hochleistungsslicers, entstanden sind.

Die Korrekturstation 10 umfasst einen ersten Förderabschnitt 14 mit zwei, insbesondere individuell steuerbaren, Korrekturspuren 15, auf denen sich unvollständige Portionen 16 befinden. Der erste Förderabschnitt 14 kann entlang einer Förderrichtung F bewegt werden. Der erste Förderabschnitt 14 ist insbesondere als Endlosförderband 14 ausgebildet. An einem Endbereich weist das Endlosförderband 14 eine Gitterstruktur 18 auf. Die Gitterstruktur 18 wird von einem Riemenförderer (nicht dargestellt) gebildet, wobei der Riemenförderer mehrere in Förderrichtung verlaufende und quer zur Förderrichtung voneinander beabstandete Endlosriemen umfasst, welche um Rollen geführt werden.

Die Korrekturstation 10 umfasst zudem einen Scheibenspeicher 20, auf dem sich Einzelscheiben 22 befinden. Dieser ist als Endlosbandförderer 20 ausgebildet, der in Förderrichtung B, d.h. in und entgegengesetzt zur Förderrichtung F, bewegt werden kann. An einem Endbereich weist der Scheibenspeicher 20 eine Gitterstruktur 18 auf.

Die Korrekturstation 10 umfasst ferner eine Übergabeeinheit 24, welche als Roboteraufnehmer 24 ausgebildet ist. Diese Übergabeeinheit 24 ist in die Bewegungsrichtungen X, Y und Z (in die Zeichenebene hinein) bewegbar. Die Bewegung erfolgt durch elektrische bzw. pneumatische Antriebe (nicht dargestellt). Der Roboteraufnehmer 24 weist eine Aufnahmegabel 26 auf, welche derart ausgebildet ist, dass sie durch die Gitterstruktur 18 hindurchgreifen kann.

Die Korrekturstation 10 weist zudem einen zweiten Förderabschnitt 28 auf, welcher als Endlosförderband 28 mit einer Gitterstruktur 18 ausgebildet ist. Auf dem zweiten Förderabschnitt 28 sind vollständige Portionen 30 dargestellt.

Durch eine nicht dargestellte Aufschneidemaschine werden zunächst Portionen 12 von einem Lebensmittelprodukt abgeschnitten. Diese Portionen 12 gelangen über einen Hauptförderer, insbesondere mehrere nebeneinanderliegende Endlosförderbänder, zu einem nicht dargestellten Sensor. Dieser Sensor ist beispielsweise als eine Mehrspurwaage ausgebildet und dazu geeignet, die Portionen 12 zu klassifizieren und insbesondere unvollständige, d.h. untergewichtige, Portionen 16 zu erkennen. Unvollständige Portionen 16 werden beispielsweise über eine nicht dargestellte Wippe aus dem Hauptförderer ausgeschleust und der Korrekturstation 10 zugeführt. Hierbei kann entweder gezielt nur die unvollständige Portion 16 spurindividuell ausgeschleust werden oder aber eine gesamte Zeile, d.h. gleichzeitig erstellte Portionen 12, die auf einem gemeinsamen oder auf voneinander getrennten Förderbändern des Hauptförderers nebeneinander liegen und zumindest eine unvollständige Portion 16 enthalten. Zeilen, die keine unvollständige Portionen 16 enthalten, werden hingegen nicht ausgeschleust und bewegen sich entlang der Förderrichtung F auf dem Hauptförderer weiter. Der Hauptförderer befindet sich beispielsweise unterhalb der Korrekturstation 10 bzw. wird durch die Korrekturstation 10 unterhalb einer Korrekturebene hindurchgeführt (nicht dargestellt).

Die ausgeschleusten Portionen 12 werden hingegen zeilenweise bis an einen Endbereich des ersten Förderabschnitts 14 gebracht. In diesem Fall sind keine individuell steuerbare Korrekturspuren 15 vorgesehen. Ein gemeinsamer Endlosbandförderer 14 reicht hierbei aus. Werden jedoch mehrere individuell steuerbare Korrekturspuren 15 eingesetzt, können die unvollständigen Portionen auch individuell an einen Endbereich des ersten Förderabschnitts 14 gebracht werden.

Erreichen die ausgeschleusten Portionen 12 einen Endbereich des ersten Förderabschnitts 14, wird das Endlosförderband 14 angehalten. Der Roboteraufnehmer 24 wird nun derart gesteuert, dass dieser eventuell vorhandene, vollständige Portionen 30 vom ersten Förderabschnitt 14 an den zweiten Förderabschnitt 28 übergibt. Unvollständige Portionen 16 werden hingegen zunächst korrigiert. Dabei wird eine unvollständige Portion 16, welche sich auf der Gitterstruktur 18 einer Korrekturspur 15 befindet, zunächst von unten von der Übergabeeinheit 24 aufgenommen. Die unvollständige Portion 16 befindet sich nun auf der Aufnahmegabel 26 des Roboteraufnehmers 24. Dieser wird anschließend zum Scheibenspeicher 20 verfahren. Dadurch, dass bereits eine unvollständige Portion 16 auf der Aufnahmegabel 26 liegt, ist es nicht möglich, von unten die Gitterstruktur 18 des Scheibenspeichers 20 zu durchdringen und auf diese Weise eine Einzelscheibe 22 aufzunehmen. Daher wird der Roboteraufnehmer 24 insbesondere unterhalb des Scheibenspeichers 20 positioniert.

Der Scheibenspeicher 20 bewegt sich nun synchron mit dem Roboteraufnehmer 24 entlang der Förderrichtung F, so dass eine Einzelscheibe 22 von oben auf die unvollständige Portion 16 aufgebracht wird. Auf diese Weise können beliebig weitere Einzelscheiben aufgenommen werden, bis die unvollständige Portion 16 eine vervollständigte Portion 30 bildet.

Alternativ ist auch denkbar, dass der Roboteraufnehmer 24 zunächst eine gewisse Anzahl von Einzelscheiben 22 aufnimmt und anschließend eine unvollständige Portion 16 von einer Korrekturspur 15 aufnimmt. Auch in diesem Fall wird der erste Förderabschnitt 14 synchron mit dem Roboteraufnehmer 24 entlang der Förderrichtung F bewegt.

Ist eine unvollständige Portion 16 vervollständigt, wird der Roboteraufnehmer 24 in X-Richtung bewegt, bis er sich oberhalb des zweiten Förderabschnitts 28 befindet. Nun wird er in Z-Richtung abgesenkt. Dabei greift die Aufnahmegabel 26 durch die Gitterstruktur 18 des zweiten Förderabschnitts 28 hindurch, während die vervollständigte Portion 30 auf dem zweiten Förderabschnitt 20 abgelegt wird.

Anschließend wird der Roboteraufnehmer 24 erneut zum ersten Förderabschnitt 14 verfahren, um weitere unvollständige Portionen 16 zu vervollständigen.

In diesem Ausführungsbeispiel ist die Übergabeeinheit 24 zudem als Formsatzbilder ausgebildet. Die Portionen 12, welche in zwei Korrekturspuren 15 des ersten Förderabschnitts 14 der Übergabeeinheit 24 zugeführt werden, werden im zweiten Förderabschnitt 28 schließlich in vier Reihen platziert.

Die vollständigen Portionen 30 werden schließlich beispielsweise mit Hilfe einer Wippe und/oder eines Einlegers wieder, insbesondere zeilenweise, in den Hauptförderer eingeschleust.

Zum Befüllen des Scheibenspeichers 20 mit Einzelscheiben 22 werden zu Beginn des Aufschneidevorgangs lediglich Einzelscheiben 22 mit Hilfe der Aufschneidemaschine abgeschnitten. Diese gelangen über den Hauptförderer in die Korrekturstation 10. Der Roboteraufnehmer 24 nimmt nun eine Einzelscheibe 22 vom ersten Förderabschnitt 14 auf und befördert diese zum Scheibenspeicher 20. Der Scheibenspeicher 20 wird entgegengesetzt zur Förderrichtung F bewegt, insbesondere um mindestens eine Scheibenlänge. Dies wird so lange wiederholt, bis im Scheibenspeicher 20 ein gewünschter Mindestfüllstand an Einzelscheiben 22 erreicht ist.

Wird während der Vervollständigung der Portionen der Füllstand im Scheibenspeicher 20 zu gering, was beispielsweise mit Hilfe eines Sensors festgestellt werden kann, so können gezielt Einzelscheiben 22 von der Aufschneidemaschine angefordert werden. Mit diesen Einzelscheiben 22 kann der Scheibenspeicher 20 wieder befüllt werden.

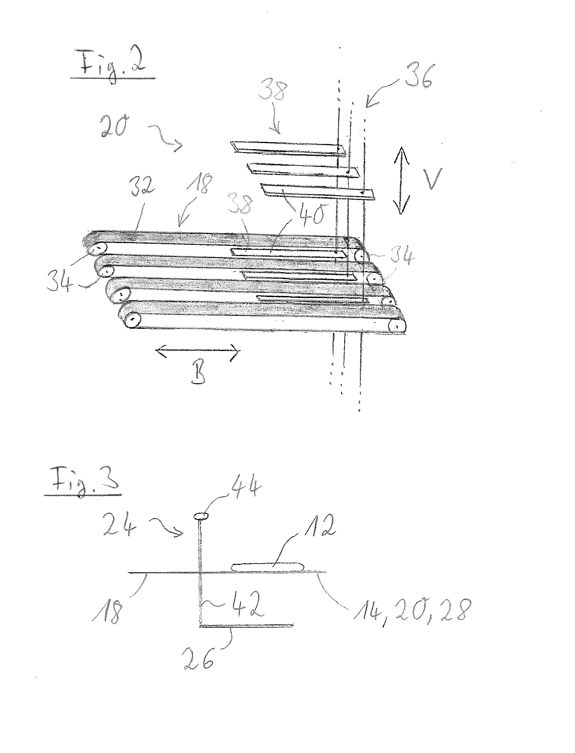

In Fig. 2 ist eine alternative Ausführungsform eines Scheibenspeichers 20 dargestellt, der in einer Korrekturstation 10 gemäß Fig. 1 anstatt des dort dargestellten Scheibenspeichers 20 eingesetzt werden kann. Der Scheibenspeicher 20 umfasst hierbei einen Vertikalspeicher 36 sowie eine Gitterstruktur 18, die durch Endlosriemen 32, welche an Rollen 34 angeordnet sind, gebildet wird. Die Endlosriemen 32 können entlang der Förderrichtung B bewegt werden.

Der Vertikalspeicher 36 umfasst Fächer 38, welche in unterschiedlichen Bereichen 38 des Vertikalspeichers 36 angeordnet sind. Diese Fächer 38 werden aus Zinken 40 gebildet, welche durch Lücken in der Gitterstruktur 18 bewegt werden können. Dazu kann der Vertikalspeicher 36 entlang der Verstellrichtung V verfahren werden. Auf diese Weise ist es möglich, Einzelscheiben 22 übereinander zu speichern. Insbesondere können die Einzelscheiben 22 beispielsweise gemäß ihrem Gewicht einem bestimmten Fach 38 zugeordnet werden.

Bevorzugt sind mehrere Vertikalspeicher 36 hintereinander angeordnet, welche jeweils mit Einzelscheiben 22 einer bestimmten Eigenschaft, z.B. eines bestimmten Gewichts, gefüllt sind. Wird zur Vervollständigung einer unvollständigen Portion 16 nun eine Einzelscheibe 22 mit einem bestimmten Gewicht benötigt, wird der entsprechende Vertikalspeicher 36 entlang der Verstellrichtung V verfahren, bis die entsprechende Einzelscheibe 22 auf der Gitterstruktur 18 abgelegt wird.

In Fig. 3 ist eine Seitenansicht eine Roboteraufnehmers 24 gezeigt. Die Aufnahmegabel 26 umfasst dabei mehrere L-förmige Zinken 42, welche durch die Gitterstruktur 18 des ersten Förderabschnitts 14, des Scheibenspeichers 20 und/oder des zweiten Förderabschnitts 28 hindurchgreifen können. Dies wird dadurch realisiert, dass die einzelnen hier L-förmigen Zinken 42 erst ausreichend weit oben durch eine Querverbindung 44 miteinander verbunden sind. Die L-förmigen Zinken 42 können somit durch die Gitterstruktur 18 hindurchgreifen und beispielsweise von unten eine Portion 12 aufnehmen bzw. von oben eine Portion 12 auf der Gitterstruktur 18 absetzen.

Durch die erfindungsgemäße Vorrichtung werden unvollständige Portionen zuverlässig und automatisch vervollständigt.

### Bezugszeichenliste

- 10: Korrekturstation
- 12: Portion
- 14: erster Förderabschnitt, Endlosförderband
- 15: Korrekturspur
- 16: unvollständige Portion
- 18: Gitterstruktur
- 20: Scheibenspeicher, Endlosbandförderer
- 22: Einzelscheibe
- 24: Übergabeeinheit, Roboteraufnehmer
- 26: Aufnahmegabel
- 28: zweiter Förderabschnitt, Endlosbandförderer
- 30: vollständige Portion, vervollständigte Portion
- 32: Endlosriemen
- 34: Rolle
- 36: Vertikalspeicher
- 38: Fach, Bereich
- 40: Zinke
- 42: L-förmige Zinke
- 44: Querverbindung

- X: Bewegungsrichtung
- Y: Bewegungsrichtung
- Z: Bewegungsrichtung
- F: Förderrichtung
- B: Förderrichtung
- V: Verstellrichtung

## Patentansprüche

1. Verfahren zum Handhaben von aus jeweils zumindest einer Einzelscheibe (22) bestehenden Portionen (12), wobei die Einzelscheiben (22) durch Aufschneiden von Lebensmittelprodukten entstanden sind, bei dem
- die Portionen (12), insbesondere zeilenweise, nacheinander in einem Hauptförderstrom entlang einer Förderrichtung (F) gefördert werden,
- unvollständige, insbesondere untergewichtige, Portionen (16) automatisch erkannt und/oder klassifiziert werden,
- unvollständige Portionen (16) aus dem Hauptförderstrom ausgeschleust und in einem Korrekturstrom einer Korrekturstation (10) zugeführt werden,
- unvollständige Portionen (16) vervollständigt werden, und
- vervollständigte Portionen (30) automatisch wieder in den Hauptförderstrom eingeschleust werden,
**dadurch gekennzeichnet, dass**
- die Vervollständigung der unvollständigen Poritonen (16) jeweils durch zumindest eine Einzelscheibe (22), welche einem Scheibenspeicher (20) entnommen wird, mithilfe einer automatischen Übergabeeinheit (24) erfolgt, wobei die Übergabeeinheit (24) zunächst eine unvollständige Portion (16) an einer Korrekturspur (15) aufnimmt, anschließend zum Scheibenspeicher (20) bewegt wird und dort zusätzlich zur unvollständigen Portion (16) zumindest eine Einzelscheibe (22) aufnimmt, oder
die Übergabeeinheit (24) zunächst zumindest eine Einzelscheibe (22) aus dem Scheibenspeicher (20) aufnimmt, anschließend zu einer Korrekturspur (15) bewegt wird und dort zusätzlich zur Einzelscheibe (22) eine unvollständige Portion (16) aufnimmt.

2. Verfahren nach Anspruch 1,
**dadurch gekennzeichnet,**
**dass** das Vervollständigen der Portionen (16) und das Entnehmen von Einzelscheiben (22) in bezüglich der Förderrichtung (F) nebeneinander liegenden Spuren erfolgen.

3. Verfahren nach Anspruch 1 oder 2,
**dadurch gekennzeichnet,**
**dass** zum Befüllen des Scheibenspeichers (20) Einzelscheiben (22) aus dem Hauptförderstrom abgezweigt und mithilfe der Übergabeeinheit (24) dem Scheibenspeicher (20) zugeführt werden, und/oder
**dass** zumindest eine Fördereinrichtung des Scheibenspeichers (20) beim Befüllen des Scheibenspeichers (20) entgegengesetzt zur Förderrichtung (F) bewegt wird.

4. Verfahren nach zumindest einem der vorherigen Ansprüche,
**dadurch gekennzeichnet,**
**dass** bei Erreichen eines bestimmten Mindestfüllstandes des Scheibenspeichers (20) Einzelscheiben (22) angefordert werden, und/oder
**dass** der Scheibenspeicher (20) mittels der Übergabeeinheit (24) befüllt wird und/oder dass die Einzelscheiben (22) aus dem Scheibenspeicher (20) mittels der Übergabeeinheit (24) entnommen werden.

5. Verfahren nach zumindest einem der vorherigen Ansprüche,
**dadurch gekennzeichnet,**
**dass** die Einzelscheiben (22) mittels eines, insbesondere optischen, Sensors klassifiziert werden, insbesondere nach der Größe, der Form und/oder dem Gewicht,
wobei insbesondere,
die Einzelscheiben (22) entsprechend ihrer Klassifikation dem Scheibenspeicher (20) zugeführt werden,
wobei insbesondere
die Einzelscheiben (22) entsprechend ihrer Klassifikation unterschiedlichen Bereichen (38) des Scheibenspeichers (20) zugeführt werden.

6. Verfahren nach zumindest einem der vorherigen Ansprüche,
**dadurch gekennzeichnet,**
**dass** die Einzelscheiben (22) übereinanderliegenden Bereichen (38) eines Vertikalspeichers (36) zugeführt werden, der zum Zuführen und Entnehmen von Einzelscheiben (22) in vertikaler Richtung (V) verfahren wird, bis eine jeweils benötigte Einzelscheibe (22), insbesondere mittels der Übergabeeinheit (24), zugeführt und/oder entnommen werden kann,
und/oder
**dass** Einzelscheiben (22) dem Scheibenpeicher (20) zugeführt werden, die zumindest im Durchschnitt eine kleinere Fläche und/oder ein geringeres Gewicht als die Scheiben der unvollständigen Portionen aufweisen.

7. Verfahren nach zumindest einem der vorherigen Ansprüche,
**dadurch gekennzeichnet,**
**dass** die Übergabeeinheit (24) in drei Dimensionen (X, Y, Z) bewegt wird.

8. Verfahren nach zumindest einem der vorherigen Ansprüche,
**dadurch gekennzeichnet,**
**dass** zum Aufnehmen einer Einzelscheibe (22) aus dem Scheibenspeicher (20) und/oder einer unvollständigen Portion (16) die Übergabeeinheit (24) synchron mit einer Fördereinrichtung des Scheibenspeichers (20) und/oder der Korrekturstation (10) bewegt wird, insbesondere in Förderrichtung (F),
und/oder
**dass** unvollständige Portionen (16) mittels zumindest eines ersten Förderabschnitts (14) aus dem Hauptförderstrom abgezweigt und vervollständigte Portionen (30) mithilfe der Übergabeeinheit (24) wenigstens einem zweiten Förderabschnitt (28) zugeführt werden, mittels welchem die vervollständigten Portionen (30) wieder dem Hauptförderstrom zugeführt werden,
und/oder
**dass** die Einzelscheiben (22) mittels einer Aufschneidevorrichtung, insbesondere einem Hochleistungsslicer, erzeugt werden, die auch die Portionen (12) erzeugt, wobei insbesondere die Portionen (12) in einem Normalbetrieb und die Einzelscheiben (22) bei ruhendem Normalbetrieb in einem Einzelscheibenbetrieb erzeugt werden oder die Aufschneidevorrichtung mehrspurig arbeitet und zumindest eine Spur für die Erzeugung der Einzelscheiben (22) vorgesehen ist.

9. Verfahren nach zumindest einem der vorherigen Ansprüche,
**dadurch gekennzeichnet,**
**dass** in einem Mehrspurbetrieb der Korrekturstation (10) die Portionen (12) zeilenweise zugeführt werden, wobei jede Portionszeile wenigstens eine unvollständige Portion (16) enthält,
und/oder
**dass** die Anzahl der Spuren (15) im Korrekturstrom von der nominellen Spuranzahl im Hauptförderstrom verschieden ist und die Übergabeeinheit (24) die einlaufenden Portionen (16) in auslaufenden Portionszeilen entsprechend der nominellen Spuranzahl anordnet.

10. Vorrichtung zum Handhaben von aus jeweils zumindest einer Einzelscheibe (22) bestehenden Portionen (12), wobei die Einzelscheiben (22) durch Aufschneiden von Lebensmittelprodukten entstanden sind, mit
einem Hauptförderer, welcher die Portionen (12), insbesondere zeilenweise, nacheinander in einem Hauptförderstrom entlang einer Förderrichtung fördert, und
einer Korrekturstation (10), der aus dem Hauptförderstrom ausgeschleuste unvollständige Portionen (16) in einem Korrekturstrom zuführbar sind,
**dadurch gekennzeichnet, dass**
ein Scheibenspeicher (20) vorgesehen ist, welcher dazu ausgebildet ist, Einzelscheiben (22) derart zu bevorraten, dass die Einzelscheiben (22) einzeln entnommen werden können, und
eine, insbesondere in einer Korrekturebene arbeitende, Übergabeeinheit (24) vorgesehen ist, welche dazu ausgebildet ist, unvollständige Portionen (16) jeweils mittels zumindest einer Einzelscheibe (22) aus dem Scheibenspeicher (20) zu vervollständigen. die Vorrichtung wenigstens einen Sensor zum automatischen Erkennen und/oder Klassifizieren unvollständiger Portionen (16) umfasst, und
wobei die Übergabeeinheit (24) derart gesteuert ist, dass sie zunächst eine unvollständige Portion (16) an einer Korrekturspur (15) aufnimmt, anschließend zum Scheibenspeicher (20) bewegt wird und dort zusätzlich zur unvollständigen Portion (16) zumindest eine Einzelscheibe (22) aufnimmt, oder
die Übergabeeinheit (24) zunächst zumindest eine Einzelscheibe (22) aus dem Scheibenspeicher (20) aufnimmt, anschließend zu einer Korrekturspur (15) bewegt wird und dort zusätzlich zur Einzelscheibe (22) eine unvollständige Portion (16) aufnimmt.

11. Vorrichtung nach Anspruch 10,
**dadurch gekennzeichnet,**
**dass** der Scheibenspeicher (20) in Förderrichtung gesehen neben zumindest einer Korrekturspur (15) der Korrekturstation (10) angeordnet ist.

12. Vorrichtung nach Anspruch 10 oder 11,
**dadurch gekennzeichnet,**
**dass** der Scheibenspeicher (20) zumindest eine Fördereinrichtung umfasst, die sowohl in als auch entgegengesetzt zur Förderrichtung (F) bewegbar ist, wobei bevorzugt der Scheibenspeicher (20) genau eine Spur aufweist,
und/oder
**dass** der Scheibenspeicher (20) zumindest einen Vertikalspeicher (36) mit mehreren übereinanderliegenden Bereichen (38) umfasst, wobei der Vertikalspeicher (36) zum Zuführen und Entnehmen von Einzelscheiben (22) senkrecht zu einer Korrekturebene verfahrbar ist.

13. Vorrichtung nach zumindest einem der Ansprüche 10 bis 12,
**dadurch gekennzeichnet,**
**dass** der Korrekturstation (10) in Förderrichtung gesehen zumindest ein erster Förderabschnitt (14) vorgelagert und wenigstens ein zweiter Förderabschnitt (28) nachgeordnet ist, wobei unvollständige Portionen (16) mittels des ersten Förderabschnitts (14) von dem Hauptförderer abzweigbar und vervollständigte Portionen (30) mithilfe der Übergabeeinheit (24) dem zweiten Förderabschnitt (28) zuführbar sind, mittels welchem die vervollständigten Portionen (30) wieder dem Hauptförderer zuführbar sind, wobei bevorzugt der erste Förderabschnitt (14) und der zweite Förderabschnitt (28) jeweils als Wippe und/oder Einleger, vorzugsweise in Form eines Endlosbandes, ausgebildet sind.

14. Vorrichtung nach zumindest einem der Ansprüche 10 bis 13,
**dadurch gekennzeichnet,**
**dass** die Übergabeeinheit einen Roboteraufnehmer (24) umfasst, wobei insbesondere
der Roboteraufnehmer (24) längs zweier senkrecht zueinander in einer Korrekturebene verlaufender Achsen (X, Y) sowie einer senkrecht zur Korrekturebene verlaufenden Achse (Z) bewegbar ist.

15. Vorrichtung nach Anspruch 14,
**dadurch gekennzeichnet,**
**dass** der Roboteraufnehmer (24) wenigstens eine Aufnahmegabel (26) umfasst, die zum Aufnehmen und/oder Ablegen von Einzelscheiben (22) und/oder Portionen (12) Gitterstrukturen (18) der Korrekturstation (10) durchdringen kann,
wobei insbesondere
die Gitterstrukturen (18) jeweils von einem Riemenförderer oder einem stationären Ablagegitter gebildet werden, wobei insbesondere der Riemenförderer mehrere in Förderrichtung verlaufende und quer zur Förderrichtung voneinander beabstandete Endlosriemen (32) umfasst.

## Claims

1. A method of handling portions (12) respectively comprising at least one single slice (22), wherein the single slices (22) have been produced by slicing food products, wherein
- the portions (12) are conveyed, in particular line-wise, after one another in a main conveying stream along a conveying direction (F);
- incomplete portions (16), in particular portions low in weight, are automatically recognized and/or classified;
- incomplete portions (16) are expelled from the main conveying stream and are supplied to a correction station (10) in a correction stream;
- incomplete portions (16) are completed; and
- completed portions (30) are automatically channeled back into the main conveying stream,
**characterized in that**
- the completion of the incomplete portions (16) respectively takes place with the aid of an automatic transfer unit (24) by at least one single slice (22) which is removed from a slice store (20), wherein
the transfer unit (24) initially takes up an incomplete portion (16) at a correction track (15), is subsequently moved to the slice store (20), and there takes up at least one single slice (22) in addition to the incomplete portion (16); or
the transfer unit (24) initially takes up at least one single slice (22) from the slice store (20), is subsequently moved to a correction track (15) and there takes up an incomplete portion (16) in addition to the single slice (22).

2. A method in accordance with claim 1,
**characterized in that**
the completion of the portions (16) and the removal of single slices (22) take place in tracks disposed next to one another with respect to the conveying direction (F).

3. A method in accordance with claim 1 or claim 2,
**characterized in that**
single slices (22) are branched off from the main conveying stream and are supplied to the slice store (20) with the aid of the transfer unit (24) to fill the slice store (20);
and/or
**in that** at least one conveying device of the slice store (20) is moved against the conveying direction (F) on the filling of the slice store (20).

4. A method in accordance with at least one of the preceding claims,
**characterized in that**
single slices (22) are demanded once a specific minimum filling level of the slice store (20) has been reached;
and/or
**in that** the slice store (20) is filled by means of the transfer unit (24); and/or **in that** the single slices (22) are removed from the slice store (20) by means of the transfer unit (24).

5. A method in accordance with at least one of the preceding claims,
**characterized in that**
the single slices (22) are classified, in particular by size, shape and/or weight, by means of a sensor, in particular an optical sensor,
wherein
the single slices (22) are in particular supplied to the slice store (20) in accordance with their classification;
wherein
the single slices (22) are in particular supplied to different zones (38) of the slice store (20) in accordance with their classification.

6. A method in accordance with at least one of the preceding claims,
**characterized in that**
the single slices (22) are supplied to zones (38) of a vertical store (36) disposed above one another, said vertical zone being moved in a vertical direction (V) for supplying and removing single slices (22) until a respectively required single slice (22) can be supplied and/or removed, in particular by means of the transfer unit (24); and/or
**in that** single slices (22) are supplied to the slice store (20) and have, at least on average, a smaller surface and/or a smaller weight than the slices of the incomplete portions.

7. A method in accordance with at least one of the preceding claims,
**characterized in that**
the transfer unit (24) is moved in three dimensions (X, Y, Z).

8. A method in accordance with at least one of the preceding claims,
**characterized in that**
the transfer unit (24) is moved synchronously with a conveying device of the slice store (20) and/or of the correction station (10), in particular in the conveying direction (F), for picking up a single slice (22) from the slice store (20) and/or for picking up an incomplete portion (16);
and/or
**in that** incomplete portions (16) are branched off from the main conveying stream by means of at least one first conveying section (14) and completed portions (30) are supplied with the aid of the transfer unit (24) to at least one second conveying section (28) by means of which the completed portions (30) are again supplied to the main conveying stream;
and/or
**in that** the single slices (22) are produced by means of a slicing apparatus, in particular a high-performance slicer, which also produces the portions (12), with in particular the portions (12) being produced in a normal mode of operation and the single slices (22) being produced with an idle normal mode of operation in a single slice operation or with the slicing apparatus working in multitracks and at least one track being provided for the production of the single slices (22).

9. A method in accordance with at least one of the preceding claims,
**characterized in that**
the portions (12) are supplied line-wise in a multitrack operation of the correction station (10), with each portion line containing at least one incomplete portion (16);
and/or
**in that** the number of tracks (15) in the correction stream differs from the nominal number of tracks in the main conveying stream and the transfer unit (24) arranges the incoming portions (16) in the outgoing portion lines in accordance with the nominal number of tracks.

10. An apparatus for handling portions (12) respectively comprising at least one single slice (22), wherein the single slices (22) have been produced by slicing food products, having
a main conveyor which conveys the portions (12), in particular line-wise, after one another in a main conveying stream along a conveying direction; and
a correction station (10) to which incomplete portions (16) expelled from the main conveying stream can be supplied in a correction stream,
**characterized in that**
a slice store (20) is provided which is configured to store single slices (22) such that the single slices (22) can be removed individually; and **in that** a transfer unit (24) is provided which in particular works in a correction plane and which is configured to complete incomplete portions (16) in each case by means of at least one single slice (22) from the slice store (20);
**in that** the apparatus comprises at least one sensor for the automatic recognition and/or classification of incomplete portions (16), and
wherein the transfer unit (24) is controlled such that it initially takes up an incomplete portion (16) at a correction track (15), is subsequently moved to the slice store (20), and there takes up at least one single slice (22) in addition to the incomplete portion (16); or
the transfer unit (24) initially takes up at least one single slice (22) from the slice store (20), is subsequently moved to a correction track (15) and there takes up an incomplete portion (16) in addition to the single slice (22).

11. An apparatus in accordance with claim 10,
**characterized in that**
the slice store (20) is arranged next to at least one correction track (15) of the correction stream (15) viewed in the conveying direction.

12. An apparatus in accordance with claim 10 or claim 11,
**characterized in that**
the slice store (20) comprises at least one conveying device which is movable both in and against the conveying direction (F), with the slice store (20) preferably having exactly one track;
and / or
**in that** the slice store (20) comprises at least one vertical store (36) having a plurality of zones (38) disposed above one another, with the vertical store (36) being movable perpendicular to a correction plane for supplying and removing single slices (22).

13. An apparatus in accordance with at least one of the claims 10 to 12,
**characterized in that**
at least one first conveying section (14) is disposed upstream of the correction station (10) viewed in the conveying direction and at least one second conveying section (28) is disposed downstream, with incomplete portions (16) being able to be branched off from the main conveyor by means of the first conveying section (14) and completed portions (30) being able to be supplied with the aid of the transfer unit (24) to the second conveying section (28) by means of which the completed portions (30) can again be supplied to the main conveyor, with the first conveying section (14) and the second conveying section (28) preferably respectively being configured as a rocker and/or as an inserter, preferably in the form of a continuous belt.

14. An apparatus in accordance with at least one of the claims 10 to 13,
**characterized in that**
the transfer unit comprises a picker robot (24),
wherein
the picker robot (24) is in particular movable along two axes (X, Y) extending perpendicular to one another in a correction plane as well as along an axis (Z) extending perpendicular to the correction plane.

15. An apparatus in accordance with claim 14,
**characterized in that**
the picker robot (24) comprises at least one pick-up fork (26) which can pass through grid structures (18) of the correction station (10) for picking up and/or placing down single slices (22) and/or portions (12),
wherein
the grid structures (18) are in particular each formed by a strap conveyor or by a stationary placing grid, with in particular the belt conveyor comprising a plurality of continuous straps (32) extending in the conveying direction and spaced apart from one another transverse to the conveying direction.

## Revendications

1. Procédé pour manipuler des portions (12) constituées respectivement d'au moins une tranche individuelle (22), dans lequel les tranches individuelles (22) ont été produites par découpe de produits alimentaires, dans lequel
- les portions (12) sont convoyées, en particulier ligne par ligne, les unes après les autres dans un courant de convoyage principal le long d'une direction de convoyage (F),
- des portions incomplètes (16), en particulier de faible poids, sont automatiquement reconnues et/ou classifiées,
- des portions incomplètes (16) sont sorties du courant de convoyage principal et amenées dans un courant de correction à une station de correction (10),
- des portions incomplètes (16) sont complétées, et
- des portions complétées (30) sont automatiquement à nouveau entrées dans le courant de convoyage principal,
**caractérisé en ce que**
- la complétion des portions incomplètes (16) a lieu respectivement par au moins une tranche individuelle (22), qui est prélevée d'un stockage de tranches (20), avec l'aide d'une unité de transfert automatique (24), dans lequel
l'unité de transfert (24) prend tout d'abord une portion incomplète (16) sur une voie de correction (15), la déplace ensuite vers le stockage de tranches (20) et prend à cet endroit en supplément à la portion incomplète (16) au moins une tranche individuelle (22), ou bien l'unité de transfert (24) prend tout d'abord au moins une tranche individuelle (22) hors du stockage de tranches (20), la déplace ensuite vers une voie de correction (15) et prend à cet endroit en supplément à la tranche individuelle (22) une portion incomplète (16).

2. Procédé selon la revendication 1,
**caractérisé en ce que** le complément des portions (16) et le prélèvement de tranches individuelles (22) ont lieu dans des voies situées les unes à côté des autres par référence à la direction de convoyage (F).

3. Procédé selon la revendication 1 ou 2,
**caractérisé en ce que**
pour le remplissage du stockage de tranches (20) on dérive des tranches individuelles (22) hors du courant de convoyage principal et on les amène au stockage de tranches (20) avec l'aide de l'unité de transfert (24),
et/ou
lors du remplissage du stockage de tranches, on déplace au moins un système de convoyage du stockage de tranches (20) en sens opposé à la direction de convoyage (F).

4. Procédé selon l'une au moins des revendications précédentes, **caractérisé en ce que**
lorsqu'on atteint un niveau de remplissage minimum déterminé du stockage de tranches (20) on appelle des tranches individuelles (22), et/ou
le stockage de tranches (20) est rempli au moyen de l'unité de transfert (24) et/ou les tranches individuelles (22) sont prélevées du stockage de tranches (20) au moyen de l'unité de transfert (24).

5. Procédé selon l'une au moins des revendications précédentes, **caractérisé en ce que**
les tranches individuelles (22) sont classifiées au moyen d'un capteur, en particulier optique, et cela en particulier selon la taille, la forme et/ou le poids,
dans lequel en particulier
les tranches individuelles (22) sont amenées au stockage de tranches (20) en correspondance de leur classification,
dans lequel en particulier
les tranches individuelles (22) sont amenées à des zones différentes (38) du stockage de tranches (20) en correspondance de leur classification.

6. Procédé selon l'une au moins des revendications précédentes,
**caractérisé en ce que**
les tranches individuelles (22) sont amenées à des zones (38) situées les unes au-dessus des autres d'un stockage vertical (36) vers lequel on s'approche en direction verticale (V) pour apporter et pour enlever des tranches individuelles (22) jusqu'à ce que l'on puisse amener et/ou enlever une tranche individuelle (22) respectivement nécessaire, en particulier au moyen de l'unité de transfert (24),
et/ou
l'on amène au stockage de tranches (20) des tranches individuelles (22) qui présentent au moins en moyenne une surface plus petite et/ou un poids plus petit que les tranches des portions incomplètes.

7. Procédé selon l'une au moins des revendications précédentes,
**caractérisé en ce que** l'unité de transfert (24) est déplacée dans trois dimensions (X, Y, Z).

8. Procédé selon l'une au moins des revendications précédentes,
**caractérisé en ce que**
pour prendre une tranche individuelle (22) hors du stockage de tranches (20) et/ou pour prendre une portion incomplète (16), l'unité de transfert (24) est déplacée de façon synchrone avec un système de convoyage du stockage de tranches (20) et/ou de la station de correction (10), en particulier en direction de convoyage (F),
et/ou
des portions incomplètes (16) sont dérivées du courant de convoyage principal au moyen d'au moins un premier secteur de convoyage (14), et des portions complétées (30) sont amenées avec l'aide de l'unité de transfert (24) à au moins un second secteur de convoyage (28), au moyen duquel les portions complétées (30) sont à nouveau amenées au courant de convoyage principal,
et/ou
les tranches individuelles (22) sont engendrées au moyen d'un appareil de découpe, en particulier une trancheuse à haute performance, qui engendre aussi les portions (12), dans lequel les portions (12) sont engendrées dans un fonctionnement normal et les tranches individuelles (22) sont engendrées dans un fonctionnement en tranches individuelles alors que le fonctionnement normal est au repos, ou bien l'appareil de découpe fonctionne sur plusieurs voies et il est prévu au moins une voie pour engendrer les tranches individuelles (22).

9. Procédé selon l'une au moins des revendications précédentes, **caractérisé en ce que**
dans un fonctionnement à plusieurs voies de la station de correction (10), les portions (12) sont amenées ligne par ligne, et chaque ligne de portions contient au moins une portion incomplète (16),
et/ou
le nombre des voies (15) dans le courant de correction est différent du nombre nominal de voies dans le courant de convoyage principal, et l'unité de transfert (24) agence les portions arrivantes (16) dans des lignes de portions sortantes en correspondance du nombre nominal de voies.

10. Appareil pour manipuler des portions (12) constituées respectivement d'au moins une tranche individuelle (22), dans lequel les tranches individuelles (22) ont été produites par découpe de produits alimentaires, comprenant
un convoyeur principal, qui convoie les portions (12), en particulier ligne par ligne, les unes après les autres dans un courant de convoyage principal le long d'une direction de convoyage, et
une station de correction (10), à laquelle des portions incomplètes (16) sorties du courant de convoyage principal peuvent être amenées dans un courant de correction,
**caractérisé en ce que**
il est prévu un stockage de tranches (20), qui est réalisé pour stocker des tranches individuelles (22) de telle façon que les tranches individuelles (22) peuvent être prélevées individuellement, et
il est prévu une unité de transfert (24), en particulier fonctionnant dans un plan de correction, qui est réalisée pour compléter des portions incomplètes (16) respectivement au moyen d'au moins une tranche individuelle (22) depuis le stockage de tranches (20),
l'appareil comprenant au moins un capteur pour reconnaître et/ou classifier automatiquement des portions incomplètes (16), et
dans lequel l'unité de transfert (24) est commandée de telle façon qu'elle prend tout d'abord une portion incomplète (16) sur une voie de correction (15), qu'elle la déplace ensuite vers le stockage de tranches (20), et qu'elle prend à cet endroit en supplément à la portion incomplète (16) au moins une tranche individuelle (22), ou
l'unité de transfert (24) prend tout d'abord au moins une tranche individuelle (22) hors du stockage tranches (20), la déplace ensuite vers une voie de correction (15), et prend à cet endroit en supplément à la tranche individuelle (22) une portion incomplète (16).

11. Appareil selon la revendication 10,
**caractérisé en ce que** le stockage de tranches (20) est agencé, vu en direction de convoyage, à côté d'au moins une voie de correction (15) de la station de correction (10).

12. Appareil selon la revendication 10 ou 11,
**caractérisé en ce que** le stockage de tranches (20) inclut au moins un système de convoyage, qui est déplaçable aussi bien dans la direction de convoyage (F) que dans la direction opposée, et de préférence le stockage de tranches (20) comprend exactement une voie,
et/ou
le stockage de tranches (20) inclut au moins un stockage vertical (36) avec plusieurs zones (38) situées les unes au-dessus des autres, et le stockage vertical (36) est déplaçable perpendiculairement à un plan de correction pour amener et pour prélever des tranches individuelles (22).

13. Appareil selon l'une au moins des revendications 10 à 12,
**caractérisé en ce que**
vue en direction de convoyage, la station de correction (10) est précédée par au moins un premier secteur de convoyage (14), et est suivie par au moins un second secteur de convoyage (28), de sorte que des portions incomplètes (16) peuvent être dérivées depuis le convoyeur principal au moyen du premier secteur de convoyage (14) et que des portions complétées (30) peuvent être amenées avec l'aide de l'unité de transfert (24) au second secteur de convoyage (28) au moyen duquel les portions complétées (30) peuvent être à nouveau amenées au convoyeur principal, et de préférence le premier secteur de convoyage (14) et le second secteur de convoyage (28) sont réalisés respectivement sous la forme de bascule et/ou de dispositif d'introduction, de préférence sous la forme d'une bande sans fin.

14. Appareil selon l'une au moins des revendications 10 à 13,
**caractérisé en ce que** l'unité de transfert inclut un dispositif récepteur robotisé (24), et en particulier le dispositif récepteur robotisé (24) est déplaçable le long de deux axes (X, Y) perpendiculaires l'un à l'autre dans un plan de correction, ainsi que le long d'un axe (Z) perpendiculaire au plan de correction.

15. Appareil selon la revendication 14,
**caractérisé en ce que** le dispositif récepteur robotisé (24) inclut au moins une fourche de réception (26), qui est capable de traverser des structures en forme de grille (18) de la station de correction (10) pour recevoir et/ou pour déposer des tranches individuelles (22) et/ou des portions (12),
dans lequel en particulier les structures en forme de grille (18) sont formées respectivement par un convoyeur à courroie ou par une grille de support stationnaire, et en particulier le convoyeur à courroie inclut plusieurs courroies sans fin (32) s'étendant dans la direction de convoyage et écartées les unes des autres perpendiculairement à la direction de convoyage.
